# EUROPEAN PATENT APPLICATION

(11) **EP 4 730 731 A1**
(43) Date of publication of application: **22.04.2026**
(21) Application number: 24850449.0
(22) Date of filing: 25.01.2024
(51) Int. Cl.: H04L 41/04, H04L 43/0888, H04L 43/08, H04L 41/0246

(54) **METHOD AND APPARATUS FOR MANAGING NETWORK MANAGEMENT INTENT, AND SYSTEM**

(30) Priority: 07.08.2023 CN 202310991543
(71) Applicant: Huawei Technologies Co., Ltd., Shenzhen, Guangdong 518129 (CN)
(72) Inventor: FENG, Xiaohan, Shenzhen, Guangdong 518129 (CN); LI, Yexing, Shenzhen, Guangdong 518129 (CN); XU, Ruiyue, Shenzhen, Guangdong 518129 (CN); XIE, Ning, Shenzhen, Guangdong 518129 (CN); YU, Yijun, Shenzhen, Guangdong 518129 (CN)
(74) Representative: Goddar, Heinz J.
(86) International application number: PCT/CN2024/073940
(87) International publication number: WO 2025/030789

(57) **Abstract**

This application provides a method for managing a network management intent, an apparatus, and a system. The method includes: determining that execution of a first management action group can not fulfill a target of a network management intent within a scope of a managed entity set of the network management intent, where the managed entity set includes at least two managed entities, and the first management action group includes at least one action for managing the managed entity set; and executing the first management action group or a second management action group, to fulfill the target of the network management intent within a scope of a managed entity subset, where the managed entity subset is a subset of the managed entity set, and the second management action group includes at least one action for managing the managed entity subset. In this way, a flexible manner of managing the network management intent is provided.

## Description

This application claims priority to Chinese Patent Application No. 202310991543.3, filed with the China National Intellectual Property Administration on August 7, 2023 and entitled "METHOD FOR MANAGING NETWORK MANAGEMENT INTENT, APPARATUS, AND SYSTEM", which is incorporated herein by reference in its entirety.

### TECHNICAL FIELD

This application relates to the field of communication technologies, and more specifically, to a method for managing a network management intent, an apparatus, and a system.

### BACKGROUND

With development of network resource management, a network management service consumption entity may not directly manage a network resource. The network management service consumption entity may send a network management intent to a network management service production entity, and the network management service production entity executes the network management intent, to fulfill an expected target of a specified performance indicator of a network device within a specific scope. Currently, a manner of managing the network management intent is not flexible. For example, when a network environment of the network management intent is complex and changeable, if determining that a target of the network management intent is not fulfilled, the network management service production entity deletes or suspends the network management intent, and then delivers a new network management intent. If the new network management intent cannot be fulfilled either, the network management service production entity deletes or suspends the new network management intent. This process is repeated.

Therefore, how to improve flexibility of managing the network management intent is an urgent technical problem to be resolved.

### SUMMARY

This application provides a method for managing a network management service intent, an apparatus, and a system, and provides a flexible manner of managing a network management intent.

According to a first aspect, a method for managing a network management intent is provided. The method may be performed by a network management service production entity or a chip in the network management service production entity. The method includes: determining that execution of a first management action group can not fulfill a target of a network management intent within a scope of a managed entity set of the network management intent, where the managed entity set includes at least two managed entities, and the first management action group includes at least one action for managing the managed entity set; and executing the first management action group or a second management action group, to fulfill the target of the network management intent within a scope of a managed entity subset, where the managed entity subset is a subset of the managed entity set, and the second management action group includes at least one action for managing the managed entity subset.

Based on this technical solution, after determining that the target of the network management intent within the scope of the managed entity set cannot be fulfilled, the production entity may flexibly execute the first management action group or the second management action group based on the managed entity subset to fulfill the target of the network management intent within the scope of the managed entity subset, instead of directly deleting or suspending the entire network management intent. This provides a flexible manner of managing the network management intent.

Executing the first management action group includes: continuing to execute the first management action group, or re-executing the first management action group.

With reference to the first aspect, in some implementations of the first aspect, the method further includes: receiving a request message, where the request message is used to request to create the network management intent or request to modify the network management intent, the request message includes the network management intent, and the network management intent includes the managed entity subset, or the request message includes the network management intent and the managed entity subset.

Based on this technical solution, a consumption entity may include the managed entity subset in the request message used to request the production entity to create the network management intent, so that signaling exchange between the consumption entity and the production entity can be reduced, and a transmission resource is saved.

With reference to the first aspect, in some implementations of the first aspect, an object context in the network management intent includes information used to determine the managed entity set and/or the managed entity subset.

With reference to the first aspect, in some implementations of the first aspect, after it is determined that the execution of the first management action group can not fulfill the target of the network management intent within the scope of the managed entity set of the network management intent, the method further includes: sending notification information, where the notification information indicates that the target of the network management intent is not fulfilled within the scope of the managed entity set; and receiving a managed entity subset in response to the notification information.

Based on this technical solution, the consumption entity may send, in response to the notification information, the managed entity subset to the production entity. In other words, the consumption entity can generate the managed entity subset based on the notification information, so that the manner of managing the network management intent is more flexible.

With reference to the first aspect, in some implementations of the first aspect, that the execution of the first management action group can not fulfill the target of the network management intent within the scope of the managed entity set of the network management intent means that the execution of the first management action group can not fulfill the target of the network management intent within the scope of the managed entity set of the network management intent in a first time period; and executing the first management action group or the second management action group to fulfill the target of the network management intent within the scope of the managed entity subset means executing the first management action group or the second management action group to fulfill the target of the network management intent within the scope of the managed entity subset in a second time period, where the second time period is a subset of the first time period.

Based on this technical solution, when determining whether the target of the network management intent is fulfilled and executing the first management action group or the second management action group, the production entity may further consider a constraint condition in a time dimension, so that the manner of managing the network management intent is more flexible.

For example, the target of the network management intent includes that a value of a performance indicator reaches a corresponding performance indicator range, where the performance indicator is an energy saving indicator or a throughput indicator.

With reference to the first aspect, in some implementations of the first aspect, executing the first management action group or the second management action group includes: determining, based on the managed entity subset, a network resource that is within the scope of the managed entity subset and that can be used to fulfill the target of the network management intent; and executing the first management action group or the second management action group based on the network resource.

Based on this technical solution, the production entity may determine the network resource that can be used, and then determine and execute the first management action group or the second management action group based on the network resource, so that reliability of managing the network management intent can be improved.

With reference to the first aspect, in some implementations of the first aspect, the method further includes: determining that a reason why the execution of the first management action group can not fulfill the target of the network management intent within the scope of the managed entity set is that an intent conflict occurs.

Based on this technical solution, in a scenario in which the intent conflict occurs, the production entity may not directly delete or suspend the entire network management intent, but may execute the first management action group or the second management action group, to fulfill the target of the network management intent within the scope of the managed entity subset, so that flexibility of managing the network management intent is improved.

With reference to the first aspect, in some implementations of the first aspect, the method further includes: sending an intent report, where the intent report includes a fulfillment status of the target of the network management intent within the scope of the managed entity subset.

Based on this technical solution, the consumption entity can learn of an execution status of the network management intent, and can better manage the network management intent.

With reference to the first aspect, in some implementations of the first aspect, the intent report further includes a fulfillment status of the target of the network management intent within the scope of the managed entity set but outside the scope of the managed entity subset.

Based on this technical solution, the consumption entity can improve, based on an overall fulfillment status of the managed entity set, the manner of managing the network management intent.

According to a second aspect, a method for managing a network management intent is provided. The method may be performed by a network management service production entity or a chip in the network management service production entity. The method includes: determining a managed entity subset, where the managed entity subset is a subset of a managed entity set of a network management intent, the managed entity set includes at least two managed entities, the managed entity subset is used to determine a second management action group when execution of a first management action group can not fulfill a target of the network management intent in the managed entity set, to fulfill the target of the network management intent within a scope of the managed entity subset, the first management action group includes at least one action for managing the managed entity set, and the second management action group includes at least one action for managing the managed entity subset; and sending the managed entity subset.

For beneficial technical effects of various implementations of the second aspect, refer to descriptions of related implementations of the first aspect. Details are not described again.

With reference to the second aspect, in some implementations of the second aspect, sending the managed entity subset includes: sending a request message, where the request message is used to request to create the network management intent or request to modify the network management intent, the request message includes the network management intent, and the network management intent includes the managed entity subset, or the request message includes the network management intent and the managed entity subset.

With reference to the second aspect, in some implementations of the second aspect, an object context in the network management intent includes information used to determine the managed entity set and/or the managed entity subset.

With reference to the second aspect, in some implementations of the second aspect, the method further includes: receiving notification information, where the notification information indicates that the target of the network management intent is not fulfilled within the scope of the managed entity set; and sending the managed entity subset includes: sending the managed entity subset in response to the notification information.

For example, the target of the network management intent includes that a value of a performance indicator reaches a corresponding performance indicator range, where the performance indicator is an energy saving indicator or a throughput indicator.

With reference to the second aspect, in some implementations of the second aspect, a reason why the execution of the first management action group can not fulfill the target of the network management intent within the scope of the managed entity set is that an intent conflict occurs.

With reference to the second aspect, in some implementations of the second aspect, the method further includes: receiving an intent report, where the intent report includes a fulfillment status of the target of the network management intent within the scope of the managed entity subset.

With reference to the second aspect, in some implementations of the second aspect, the intent report further includes a fulfillment status of the target of the network management intent within the scope of the managed entity set but outside the scope of the managed entity subset.

According to a third aspect, a method for managing a network management intent is provided. The method includes: sending a managed entity subset; receiving the managed entity subset; determining that execution of a first management action group can not fulfill a target of a network management intent within a scope of a managed entity set of the network management intent, where the managed entity set includes at least two managed entities, and the first management action group includes at least one action for managing the managed entity set; and executing the first management action group or a second management action group, to fulfill the target of the network management intent within a scope of the managed entity subset, where the managed entity subset is a subset of the managed entity set, and the second management action group includes at least one action for managing the managed entity subset.

For beneficial technical effects of various implementations of the third aspect, refer to descriptions of related implementations of the first aspect. Details are not described again.

With reference to the third aspect, in some implementations of the third aspect, a request message is sent, where the request message is used to request to create the network management intent or request to modify the network management intent, the request message includes the network management intent, and the network management intent includes the managed entity subset, or the request message includes the network management intent and the managed entity subset. The request message is received.

With reference to the third aspect, in some implementations of the third aspect, an object context in the network management intent includes information used to determine the managed entity set and/or the managed entity subset.

With reference to the third aspect, in some implementations of the third aspect, after it is determined that the execution of the first management action group can not fulfill the target of the network management intent within the scope of the managed entity set of the network management intent, the method further includes: sending notification information, where the notification information indicates that the target of the network management intent is not fulfilled within the scope of the managed entity set; receiving the notification information; and receiving the managed entity subset in response to the notification information.

With reference to the third aspect, in some implementations of the third aspect, that the execution of the first management action group can not fulfill the target of the network management intent within the scope of the managed entity set of the network management intent means that the execution of the first management action group can not fulfill the target of the network management intent within the scope of the managed entity set of the network management intent in a first time period; and executing the first management action group or the second management action group to fulfill the target of the network management intent within the scope of the managed entity subset means executing the first management action group or the second management action group to fulfill the target of the network management intent within the scope of the managed entity subset in a second time period, where the second time period is a subset of the first time period.

For example, the target of the network management intent includes that a value of a performance indicator reaches a corresponding performance indicator range, where the performance indicator is an energy saving indicator or a throughput indicator.

With reference to the third aspect, in some implementations of the third aspect, executing the first management action group or the second management action group includes: determining, based on the managed entity subset, a network resource that is within the scope of the managed entity subset and that can be used to fulfill the target of the network management intent; and executing the first management action group or the second management action group based on the network resource.

With reference to the third aspect, in some implementations of the third aspect, it is determined that a reason why the execution of the first management action group can not fulfill the target of the network management intent within the scope of the managed entity set is that an intent conflict occurs.

With reference to the third aspect, in some implementations of the third aspect, the method further includes: sending an intent report, where the intent report includes a fulfillment status of the target of the network management intent within the scope of the managed entity subset; and receiving the intent report.

With reference to the third aspect, in some implementations of the third aspect, the intent report further includes a fulfillment status of the target of the network management intent within the scope of the managed entity set but outside the scope of the managed entity subset.

According to a fourth aspect, an apparatus for managing a network management intent is provided. The apparatus includes a determining unit and an execution unit. The determining unit is configured to determine that execution of a first management action group can not fulfill a target of a network management intent within a scope of a managed entity set of the network management intent, where the managed entity set includes at least two managed entities, and the first management action group includes at least one action for managing the managed entity set. The execution unit is configured to execute the first management action group or a second management action group, to fulfill the target of the network management intent within a scope of a managed entity subset, where the managed entity subset is a subset of the managed entity set, and the second management action group includes at least one action for managing the managed entity subset.

The determining unit and the execution unit may be units in a processing unit.

For various implementations of the fourth aspect and beneficial technical effects of the implementations, refer to descriptions of related implementations of the first aspect. Details are not described again.

According to a fifth aspect, an apparatus for managing a network management intent is provided. The apparatus includes a transceiver unit and a processing unit. The processing unit is configured to determine a managed entity subset, where the managed entity subset is a subset of a managed entity set of a network management intent, the managed entity set includes at least two managed entities, the managed entity subset is used to determine a second management action group when execution of a first management action group can not fulfill a target of the network management intent in the managed entity set, to fulfill the target of the network management intent within a scope of the managed entity subset, the first management action group includes at least one action for managing the managed entity set, and the second management action group includes at least one action for managing the managed entity subset. The transceiver unit is configured to send the managed entity subset.

For various implementations of the fifth aspect and beneficial technical effects of the implementations, refer to descriptions of related implementations of the first aspect and the second aspect. Details are not described again.

According to a sixth aspect, a communication apparatus is provided. The communication apparatus has a function of implementing any one of the first aspect or the possible implementations of the first aspect, any one of the second aspect or the possible implementations of the second aspect, or any one of the third aspect or the possible implementations of the third aspect. The function may be implemented by hardware, or may be implemented by hardware executing corresponding software. The hardware or the software includes one or more units corresponding to the foregoing function.

According to a seventh aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method according to the first aspect or any one of the possible implementations of the first aspect.

For example, the communication apparatus is a network management service production entity.

According to an eighth aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method according to the second aspect or any one of the possible implementations of the second aspect.

For example, the communication apparatus is a network management service consumption entity.

According to a ninth aspect, a communication apparatus is provided, and includes a processor and a communication interface. The communication interface is configured to: receive data and/or information, and transmit the received data and/or information to the processor. The processor processes the data and/or the information. In addition, the communication interface is further configured to output data and/or information that are/is obtained through processing by the processor, so that the method according to the first aspect or any one of the possible implementations of the first aspect is performed. The communication apparatus may be a chip used in a network management service production network element.

According to a tenth aspect, a communication apparatus is provided, and includes a processor and a communication interface. The communication interface is configured to: receive data and/or information, and transmit the received data and/or information to the processor. The processor processes the data and/or the information. In addition, the communication interface is further configured to output data and/or information that are/is obtained through processing by the processor, so that the method according to the second aspect or any one of the possible implementations of the second aspect is performed. The communication apparatus may be a chip used in a network management service consumption network element.

According to an eleventh aspect, a computer-readable storage medium is provided. The computer-readable storage medium stores computer instructions, and when the computer instructions are run on a computer, the method according to the first aspect or any one of the possible implementations of the first aspect is performed.

According to a twelfth aspect, a computer-readable storage medium is provided. The computer-readable storage medium stores computer instructions, and when the computer instructions are run on a computer, the method according to the second aspect or any one of the possible implementations of the second aspect is performed.

According to a thirteenth aspect, a computer program product is provided. The computer program product includes computer program code, and when the computer program code is run on a computer, the method according to the first aspect or any one of the possible implementations of the first aspect is performed.

According to a fourteenth aspect, a computer program product is provided. The computer program product includes computer program code, and when the computer program code is run on a computer, the method according to the second aspect or any one of the possible implementations of the second aspect is performed.

According to a fifteenth aspect, a wireless communication system is provided, and includes the communication apparatus according to the fourth aspect and/or the communication apparatus according to the fifth aspect.

According to a sixteenth aspect, a wireless communication system is provided, and includes the communication apparatus according to any one or more of the fourth aspect to the fifteenth aspect, or the communication apparatus according to any one of the possible implementations of any one of the aspects.

### BRIEF DESCRIPTION OF DRAWINGS

FIG. 1 is a diagram of a data structure of a network management intent;
FIG. 2 is a diagram of an architecture of a communication system to which an embodiment of this application is applicable;
FIG. 3 is a schematic flowchart of a method for managing a network management intent according to an embodiment of this application;
FIG. 4 is a schematic flowchart of an implementation of a network management intent according to an embodiment of this application;
FIG. 5 is a schematic flowchart of another implementation of a network management intent according to an embodiment of this application; and
FIG. 6 to FIG. 8 are diagrams of possible communication apparatuses according to embodiments of this application.

### DESCRIPTION OF EMBODIMENTS

The following describes technical solutions of this application with reference to accompanying drawings.

The technical solutions of this application may be applied to various network functions virtualization (network functions virtualization, NFV) systems. In the systems, current service technical solutions, network construction schemes, and network operations and maintenance methods of an operator may be described as modes and policies in a standard formal language, and the technical solutions and the construction schemes are implemented based on the modes and the policies. For example, the technical solutions in this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, an open network automation platform (open network automation platform, ONAP) system, or the like.

For clarity, the following explains some terms in embodiments of this application.

### 1. Network management, network management service, network management service production entity, and network management service consumption entity

### 1.1 Network management

The network management refers to managing a network resource, including but not limited to monitoring, controlling, and recording performance and usage of the network resource, and delivering a management action group to the network resource (for example, a device in a network) based on a detected network status, to enable the network to run effectively. For example, the network management may be monitoring, testing, configuring, analyzing, evaluating, and controlling the network resource. The network management may alternatively be that when a fault occurs in the network, the fault can be reported and processed in time, a network system can be coordinated and maintained to run efficiently, and the like. The network resource is an object to which the network management is applied, and may also be referred to as a network object or a managed entity. For example, the network resource may be a base station device, a router, a switch, or a core network device. This is not particularly limited in embodiments of this application. For ease of description, the managed entity is used as an example for description in embodiments of this application, but may be replaced with another object to which the network management is applied.

### 1.2 Network management service

The network management service refers to a service that provides a network management function. A production entity of the service usually provides the network management function for a consumption entity of the service through a network interface (for example, a service based interface, service based interface).

### 1.3 Network management service production entity

An entity that provides the network management service is referred to as a network management service production entity. For example, a capability or a function of the network management service production entity may be deployed on a specific network element, and the network element is referred to as a network management service production network element. Alternatively, a capability or a function of the network management service production entity may be deployed on another device. This is not limited in embodiments of this application. For ease of description, the network management service production entity is used as an example for description in embodiments of this application, but may be replaced with another device on which the capability or the function of the network management service production entity is deployed.

### 1.4 Network management service consumption entity

An entity that invokes the network management is referred to as a network management service consumption entity. For example, a capability or a function of the network management service consumption entity may be deployed on a specific network element, and the network element is referred to as a network management service consumption network element. Alternatively, a capability or a function of the network management service consumption entity may be deployed on another device. This is not limited in embodiments of this application. For ease of description, the network management service consumption entity is used as an example for description in embodiments of this application, but may be replaced with another device on which the capability or the function of the network management service consumption entity is deployed.

### 2. Network management intent (intent for short)

The network management intent refers to a requirement of the network management service consumption entity for the network management service, and may also be referred to as a network management service requirement. This name is not limited in embodiments of this application. For example, the network management intent may be an intent like an optical private line service intent or an energy saving intent, for example, an intent (intent) defined in the 3rd generation partnership project (3rd generation partnership project, 3GPP) standard specification 28.312.

In an intent-based interaction scenario of this application, two roles are mainly included: a network management provision entity and the network management service consumption entity. The network management provision entity may also be referred to as a network management provider, an intent provider (intent provider), an intent handler (intent handler), or the like. The network management service consumption entity may also be referred to as a network management service consumer, an intent consumer (intent consumer), an intent owner (intent owner), or the like.

The network management service consumption entity may be an invoker of the network management service, and may perform operations such as creating, modifying, deleting, and querying for a network management intent expression. The network management service consumption entity may be configured in a network management system (network management system, NMS), an element management system (element management system, EMS), or a network device (network equipment, NE), and may be a management function, a management function entity, a management entity, a network device, a network element, or the like. This is not limited in this application.

The intent may be applied to the network system, to fulfill an expected target of a specified performance indicator of the network device within a specific scope. The intent may express an expectation for the network system by using a formal specification and description information. The formal specification may be intent-specific syntax or semantics, and the description information may be used to describe a requirement, a target, and a constraint of the intent.

The intent may include at least one intent expectation. Each intent expectation may represent a performance requirement of the network management service consumption entity for a specific network object. One intent expectation may include at least one expected target and an expected object, and each expected target may represent a performance requirement of the network management service consumption entity for a specific attribute of the expected object. For example, the intent expectation may include two expected targets. One expected target is that an average downlink throughput is greater than 5 Mbps, and the other expected target is that an end-to-end latency is less than 10 milliseconds. If the average downlink throughput of the expected object is greater than 5 Mbps, the expected target related to the downlink throughput is fulfilled. If the end-to-end latency of the expected object is less than 10 milliseconds, the expected target related to the latency is fulfilled. If two expected targets of the intent expectation are fulfilled, the intent expectation is fulfilled. If one or more intent expectations are not fulfilled, or one or more expected targets are not satisfied, the intent is not satisfied, or it is described as that the intent is not fulfilled (fulfilled), or the intent is not implemented.

The intent may further include an intent context. The intent context may represent a constraint or a condition of the network management service consumption entity for the intent. For example, the network management service consumption entity may constrain acting duration of the intent by using the intent context.

The intent may further include an expected context. The expected context may represent a constraint or a condition of the network management service consumption entity for one intent expectation. For example, the network management service consumption entity may constrain acting duration of the intent expectation by using the expected context.

The intent may further include a target context, where the target context may represent a constraint or a condition of the network management service consumption entity for one expected target. For example, the network management service consumption entity may constrain acting duration of the expected target by using the target context.

The intent may further include an object context, where the object context may represent a constraint or a condition of the network management service consumption entity for a network object on which the intent acts. For example, the network management service consumption entity may indicate, by using the object context, an area in which the network object on which the intent acts is located.

The intent expectation, the expected target, and the intent context described above may be used as information elements in an information object class (information object class, IOC) in an intent creation request. The network management service consumption entity may send the information element to the network management service production entity, to express the requirement for the network management service.

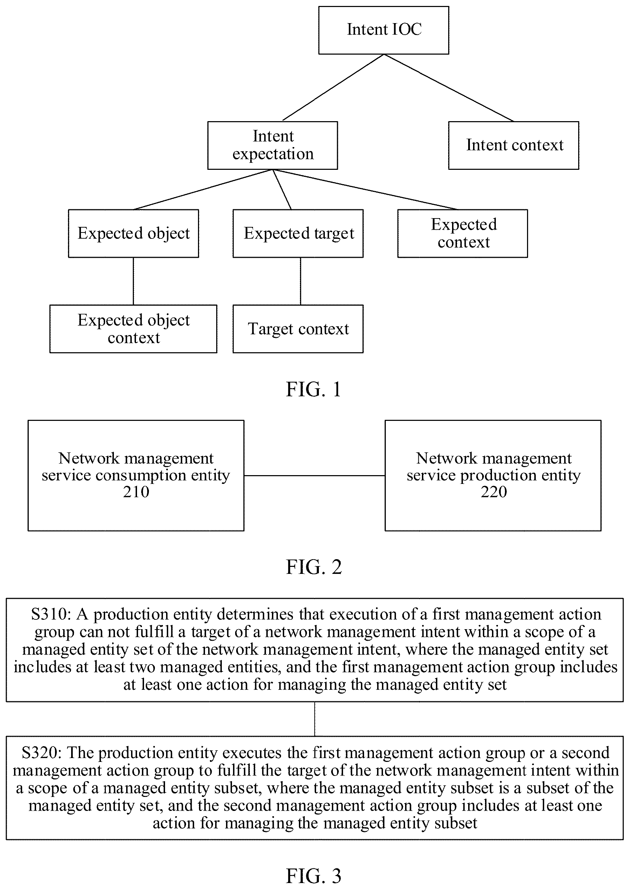

The information element in the intent IOC may express the requirement for the network management service by using a specific structure. For example, FIG. 1 is a diagram of a structure of an intent IOC.

Refer to FIG. 1. The intent IOC includes an intent expectation and an intent context. The intent expectation includes an expected object, an expected target, and an expected context. The expected object includes an expected object context (or may be referred to as an object context), and the expected target includes a target context. It may be understood that an information element of a non-context type (for example, the intent IOC, the intent expectation, the expected object, or the expected target) may include an information element of a context type (for example, the intent context, the expected object context, the target context, or the expected context). The information element of the context type can be used to constrain the information element of the non-context type.

It may be understood that FIG. 1 schematically describes a relationship between attributes in the intent IOC. Based on a network management service requirement, the intent IOC may further include another attribute. This is not particularly limited in this application. It may be further understood that a quantity of attributes of a same type is not particularly limited in this application. For example, one intent IOC may include one or more parallel intent expectation attributes, and one intent expectation may also include one or more parallel expected target attributes.

### 3. Network management intent template

The network management intent template refers to sample description information of the network management intent, and may also be referred to as a network management service requirement template. This name is not limited in embodiments of this application. The intent template may be used to specify syntax and semantics of various attribute expressions described above. For example, the intent template may specify a field type, a value type, and the like that may be used for each attribute in the IOC. For example, the intent template may include intent expectation description information used to specify how the intent expectation is expressed, and the intent expectation description information may specify a type of an expected target attribute that may be included in the intent expectation, for example, a latency, a bandwidth, a maximum quantity of users. The intent expectation description information may further specify a field type of each expected target. For example, a field type of an expected target related to the latency is a character string, a field type of an expected target related to the bandwidth is a character string, and a field type of an expected target related to the maximum quantity of users is an integer. For another example, the intent template may further include intent context description information that specifies how the intent context and the expected context are expressed. The intent context description information may be used to specify a field type of the intent context, and the like. This is not particularly limited in this application.

### 4. Intent expression

In embodiments of this application, the intent expression is an information form for expressing the network management service intent, and may be an instantiation result of the network management intent template. A consumer of the network management intent may instantiate the intent IOC based on the intent template to generate the intent expression. The intent expression generated after the instantiation can be used for a specific network service. For example, the intent expression may be represented by a list of a group of attributes and key-value pairs (for example, a group of [attribute, value]) of the network management service intent.

For example, the intent expression includes a performance indicator information instance, a network object information instance, and a context information instance.

For example, the performance indicator information instance may include a value or a value range of target indicator requirement corresponding to performance indicator information. For example, the target indicator requirement corresponding to a performance indicator information template includes a bandwidth parameter, and the performance indicator information instance includes that a value of the bandwidth parameter is 20M, or a value range of the bandwidth parameter is 10M to 15M. For example, the target indicator requirement corresponding to the performance indicator information template includes a latency parameter, and a latency parameter instance includes that a value of the latency parameter is 2s, or a value range of the latency parameter is 1s to 5s.

A target network object indicated by the network object information instance is an instantiation result of a target network object indicated by a network object information template. For example, the target network object indicated by the network object information instance is one of target network objects indicated by the network object information template, in other words, indicates one of a physical entity or a logical entity that implements the network management service. In this case, the network object information instance indicates a specific network object. For example, the network object information template indicates a network service, and the network object information instance indicates an energy saving service.

The context information instance indicates a constraint condition of the network management intent expression. For example, the context information instance includes a constraint parameter of the network management intent expression. For example, the context information instance may include source and sink information and the like corresponding to the target network object indicated by the network object instance.

An intent expectation information instance includes the performance indicator information instance and the network object information instance.

In embodiments of this application, an "intent" whose transmission is performed by using a message is an intent expression.

### 5. Intent instance

A network management intent instance refers to a network management intent processing process locally created by the network management service provision entity based on the received network management intent expression (for example, the performance indicator information instance, the network object information instance, or the context information instance).

The network management intent processing process is used to process the network management intent expression. For example, the network management intent processing process may include an identifier, and the identifier is used to identify the process. The network management intent processing process may include a computing resource, and the computing resource is used to perform operations such as network management intent translation and database (for example, a semantic knowledge base) query. The network management intent processing process may include a storage resource, and the storage resource is used to store the network management intent expression, a result of the network management intent translation, and the like.

The network management intent translation is used to convert the network management intent expression into a corresponding management action group. The management action group may be instructions that are applied to the physical entity or the logical entity, for example, adjusting an antenna tilt of a specific base station or turning on an energy saving switch of a specific cell.

### 6. Network management action group (actions)

The network management action group is one or more network management actions generated by the network management service production entity based on the intent expression. The network management service production entity executes the one or more network management actions to fulfil an intent of the network management service consumption entity. The network management action group may also be referred to as a management operation, an intent operation, or a network management task. The network management action group may be an operation instruction set for the expected object (for example, the physical entity or the logical entity to which the intent is applied and that is in the network system), and includes one or more instructions, for example, adjusting an antenna tilt of a specific base station or turning on an energy saving switch of a specific cell.

The network management service production entity may generate a plurality of management action groups based on the intent expression. In an execution process, the network management service production entity may select some management action groups from the plurality of management action groups at one time for execution. In other words, the management action group generated by the network management service production entity based on intent expression translation is an optional operation that can be used to fulfil the intent. The network management service production entity may select one of the network management action groups for execution to fulfil the intent, or may select the network management action group at a plurality of times for execution to fulfil the intent.

The foregoing describes related terms in embodiments of this application. The following describes, with reference to FIG. 1, an application scenario to which embodiments of this application are applicable.

The foregoing describes related terms in embodiments of this application. The following describes, with reference to FIG. 1, an application scenario to which embodiments of this application are applicable.

FIG. 2 is a diagram of a structure of a communication system to which an embodiment of this application is applicable. First, an apparatus that may be used in the communication system is described.
1. A network management service consumption entity 210 may be configured to invoke a management service, or invoke an intent service to manage a network system. For example, the network management service consumption entity 210 may instantiate an intent template, may set an intent IOC, to generate an intent expression, and may send the intent expression to a network management service production network element 220, to implement an expectation for the network system.

The network management service consumption entity 210 may also be referred to as a network management service consumption network element, a network management service consumer, an intent management service consumer (intent management service consumer), an intent consumer (intent consumer), an intent owner (intent owner), or the like. In a future communication system, the network management service consumption entity may also have another name. This is not particularly limited in this application.

2. A network management service production entity 220 may be configured to provide the management service. For example, the network management service production entity 220 may receive the intent expression from the network management service consumption entity 210, and perform, based on the intent expression, procedures of intent translation, intent management, and intent execution and maintenance.

The network management service production entity 220 may also be referred to as a network management service production network element, an intent management service provider (intent management service provider), a network management service producer, an intent provider (intent provider), an intent handler (intent handler), or the like. In the future communication system, the network management service production entity may also have another name. This is not particularly limited in this application.

The foregoing entity may be a network element in a hardware device, a software function running on dedicated hardware, or a virtualization function instantiated on a platform (for example, a cloud platform). It may be understood that the foregoing entity may be implemented by one device, or may be implemented by a plurality of devices together. In addition, the foregoing entity may alternatively be a functional module in a system, for example, a functional module in a network management system (network management system, NMS), an equipment management system (equipment management system, EMS), or a device, for example, one or more functional modules in a network device (network equipment, NE). The network device may be a base station or a core network element.

For example, the network management service consumption entity 210 may be deployed in the NMS, and the network management service production entity 220 may be deployed in different EMSs. The network management service consumption entity 210 and the network management service production entity 220 may exchange information through an interface between the NMS and the EMS.

For another example, the network management service consumption entity 210 may be deployed in the EMS, and the network management service production entity 220 may be deployed in different NEs. The network management service consumption entity 210 and the network management service production entity 220 may exchange information through an interface between the NMS and the EMS.

The solution of this application may be further applied to another system including a corresponding entity. This is not limited in this application, and is not specifically limited in embodiments of this application.

With development of network resource management, a network management service consumption entity may not directly manage a network resource. The network management service consumption entity may send a message to the network management service production entity, so that the network management service production entity executes a network management intent, to fulfill an expected target of a specified performance indicator of a network device within a specific scope. Currently, an application environment of the network management intent is usually complex and changeable. Therefore, how to manage the network management intent in the complex and changeable environment is an urgent technical problem to be resolved.

FIG. 3 is a schematic flowchart of a method for managing a network management intent according to an embodiment of this application. For ease of description, in the following, a network management service production entity is briefly referred to as a production entity, a network management service consumption entity is briefly referred to as a consumption entity, and a network management intent is briefly referred to as an intent.

S310: The production entity determines that execution of a first management action group can not fulfill a target of the network management intent within a scope of a managed entity set of the network management intent.

The managed entity set includes at least two managed entities. The first management action group includes at least one action for managing the managed entity set.

S320: The production entity executes the first management action group or a second management action group, to fulfill the target of the network management intent within a scope of a managed entity subset.

The managed entity subset is a subset of the managed entity set. The second management action group includes at least one action for managing the managed entity subset. In other words, after determining that the target of the network management intent within the scope of the managed entity set cannot be fulfilled, the production entity may flexibly execute the first management action group or the second management action group based on the managed entity subset to fulfill the target of the network management intent within the scope of the managed entity subset, instead of directly deleting or suspending the entire network management intent. This provides a flexible manner of managing the network management intent.

It may be understood that fulfilling (fulfilling) the target of the network management intent may also be described as fulfilling the target of the network management intent, implementing the target of the network management intent, or the like.

In this embodiment of this application, the network management intent may be various types of network management intents. A type of the network management intent may be related to the target included in the network management intent. For example, the target of the network management intent includes that a value of a performance indicator reaches a corresponding performance indicator range. When the performance indicator is a throughput indicator, for example, the throughput indicator is that an average downlink throughput is greater than or equal to 5 Mbps, the network management intent may be referred to as a throughput intent. When the performance indicator is an energy saving indicator, for example, the energy saving indicator is that saved energy is greater than or equal to 10 kilowatts, the network management intent may be referred to as an energy saving intent. The type of the performance indicator is not particularly limited in this application. For example, the performance indicator may alternatively be a coverage indicator, a latency indicator, or the like.

The managed entity set includes a plurality of managed entities. Types of at least two managed entities in the plurality of managed entities may be the same or may be different. For example, the plurality of managed entities may include any one or more of a base station device, a router, a switch, or a core network device. The managed entity subset is a subset of the managed entity set. In other words, the managed entity subset is a part of managed entities, and the managed entity subset includes a part of managed entities in the plurality of managed entities included in the managed entity set. For example, the managed entity set includes 10 base station devices, and the managed entity subset includes five base station devices in the 10 base station devices. For another example, the managed entity set includes five base station devices and five routers, and the managed entity subset includes the five routers. For still another example, the managed entity set includes 100 cells, and the managed entity subset includes 50 cells. This is not particularly limited in this application.

The managed entity set may be indicated by an object context. For descriptions of the object context, refer to the foregoing descriptions. Details are not described herein again. For example, the object context indicates an area in which the managed entity set is located. For example, the object context includes a coverage area polygon (polygon) or a coverage area tracking area code (tracking area code, TAC) corresponding to the area in which the managed entity set is located. In this way, the production entity may determine the managed entity set based on the object context. For example, the production entity may determine, based on the object context, that all base station devices in the area in which the managed entity set is located form the managed entity set. A type (for example, a base station device) of a managed entity in the area in which the managed entity set is located may be preconfigured, or may be indicated by other information. This is not particularly limited in this application.

The managed entity subset may be determined in a plurality of manners. For example, the consumption entity may determine the managed entity subset based on historical data, where the historical data may include a historical intent report of the network management intent. For example, the consumption entity may determine the managed entity subset based on a historical fulfillment status of the target of the network management intent. For example, the consumption entity may determine a managed entity in an area with a lowest historical fulfillment rate of the target as the managed entity subset. For another example, the consumption entity may alternatively determine the managed entity subset based on other information, for example, user feedback information. For example, the consumption entity may obtain a user tolerance for unfulfillment of the target. For example, the consumption entity may determine a managed entity in an area with a low user tolerance for the unfulfillment of the target as the managed entity subset. In this way, a satisfaction with a network management intent service can be improved. A manner of determining the managed entity subset is not particularly limited in this application. For example, the managed entity subset may alternatively be determined based on setting of an operator. In this way, differentiated assurance can be obtained within the scope of the managed entity set of the network management intent, and a network resource utilization rate can be improved.

It may be understood that the manner of determining the managed entity subset may be related to the type of the network management intent. For example, for the throughput intent, the consumption entity may determine a managed entity subset of the throughput intent based on the user tolerance for the unfulfillment of the target. For the energy saving intent, the consumption entity may determine a managed entity subset of the energy saving intent based on the historical intent report. This is not particularly limited in this application.

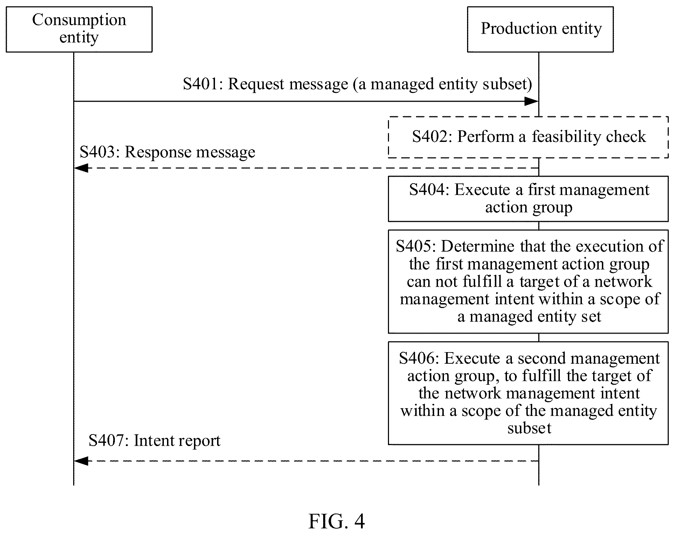

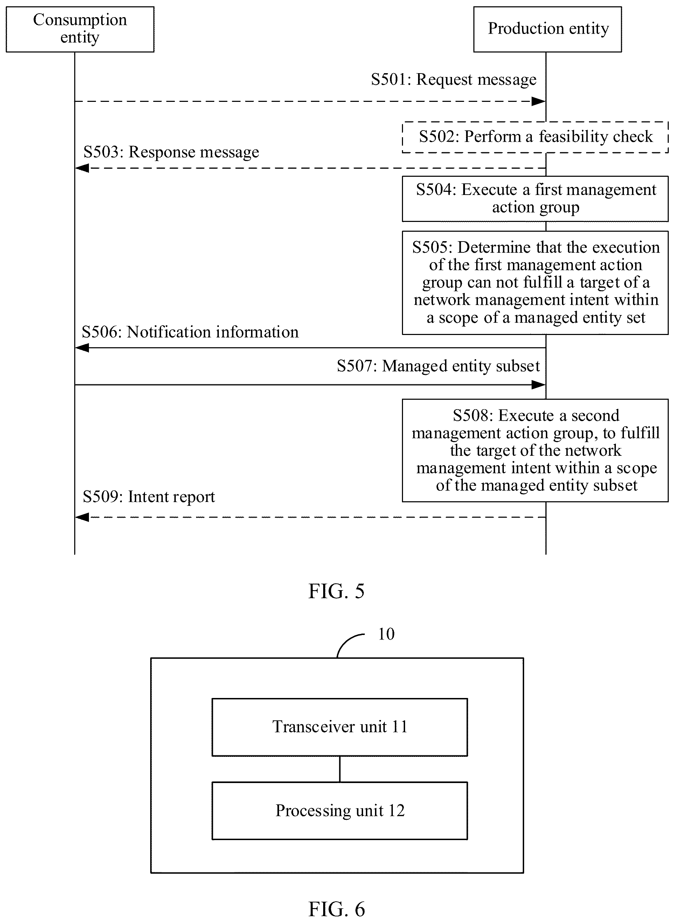

The production entity may obtain the managed entity subset in a plurality of manners. In some possible implementations, the production entity may determine the managed entity subset by using a data structure of the network management intent (for example, the data structure of the network management intent shown in FIG. 1). The managed entity subset is a constraint condition in a space dimension. In other words, the managed entity subset may be indicated by the object context. The object context may further include a constraint or condition (which, for example, may be defined as assuranceSubsetAttri) used to determine the managed entity subset. The network management intent includes an expected object, the expected object includes the object context, and the object context includes a space constraint condition. For example, the object context includes a space constraint condition: a TAC corresponding to an area #1 and a TAC corresponding to an area #2. The area #1 is the area in which the managed entity set is located, the area #2 is an area in which the managed entity subset is located, and the area #1 includes the area #2. In this way, the production entity may execute the first management action group or the second management action group based on the area in which the managed entity subset is located. In some other possible implementations, the managed entity subset may alternatively be indicated by other information. For example, when determining that the execution of the first management action group can not fulfill the target of the network management intent within the scope of the managed entity set of the network management intent, the production entity may send notification information to the consumption entity, so that the consumption entity may indicate the managed entity subset to the production entity. For more-detailed descriptions of obtaining the managed entity subset by the production entity, refer to the following descriptions in FIG. 4 and FIG. 5. Details are not described herein.

In some implementations, the production entity may further obtain information about a time period. For example, the production entity may obtain information indicating a first time period and information indicating a second time period. The first time period may be used to determine whether the execution of the first management action group fulfills the target of the network management intent within the scope of the managed entity set. The second time period may be used to execute the first management action group or the second management action group, to fulfill the target of the network management intent within the scope of the managed entity subset in the second time period. The second time period is a subset of the first time period. For example, the first time period is 24 hours of one day, and the second time period is from 9 a.m. to 6 p.m. of one day. In this case, that the execution of the first management action group can not fulfill the target of the network management intent within the scope of the managed entity set of the network management intent means that the execution of the first management action group can not fulfill the target of the network management intent within the scope of the managed entity set of the network management intent in the first time period. Executing the first management action group or the second management action group to fulfill the target of the network management intent within the scope of the managed entity subset means executing the first management action group or the second management action group to fulfill the target of the network management intent within the scope of the managed entity subset in the second time period. For example, a managed entity set of the throughput intent corresponds to an area A, the first time period is 24 hours of one day, the managed entity subset corresponds to an area B, and the second time period is from 9 a.m. to 6 p.m. of one day. If the production entity determines that the execution of the first management action group can not enable the throughput indicator to be greater than or equal to 5 Mbps in the area A within 24 hours of one day, the production entity may execute the first management action group or the second management action group, to enable the throughput indicator to be greater than or equal to 5 Mbps in the area B from 9 a.m. to 6 p.m. In this way, when determining whether the target of the network management intent is fulfilled and executing the first management action group or the second management action group, the production entity may further consider a constraint condition in a time dimension, so that the manner of managing the network management intent is more flexible.

It may be understood that the production entity may obtain, in a plurality of manners, the information indicating the first time period and the information indicating the second time period. In some implementations, the production entity may obtain the first time period and the second time period based on the network management intent. For example, the first time period and the second time period may be a time constraint condition in the object context. For example, the managed entity subset is an object context, and the time constraint condition is a constraint condition of the object context in the time dimension. Alternatively, the consumption entity may send the information indicating the first time period and the information indicating the second time period to the production entity by using separate information. This is not particularly limited in this application.

The production entity may execute the first management action group based on the managed entity set, where the first management action group includes at least one action for managing the managed entity set. For example, the production entity may send an instruction of an action group to the plurality of managed entities in the managed entity set, and the managed entities execute the action group according to the instruction, to fulfill the network management intent within the scope of the managed entity set. The throughput intent is used as an example. For example, the throughput intent includes a target that the average downlink throughput is greater than 5 Mbps. The production entity sends, to the plurality of managed entities in the managed entity set, an instruction used to adjust an antenna tilt and reduce a quantity of symbols corresponding to a physical downlink control channel. The plurality of managed entities execute an action group (for example, a base station modifies an associated communication parameter) according to the instruction, to fulfill the target that the average downlink throughput is greater than or equal to 5 Mbps. The energy saving intent is further used as an example. For example, the energy saving intent includes that saved energy is greater than or equal to 10 kW. The production entity may send, to the plurality of managed entities in the managed entity set, an instruction instructing to turn on an energy saving switch, and the plurality of managed entities turn on the energy saving switch to enable the saved energy to be greater than or equal to 10 kW. Turning on the energy saving switch may refer to enabling carrier shutdown, symbol shutdown, radio frequency module dormancy, or the like. This is not particularly limited in this application.

The production entity may determine, in a plurality of manners, that the execution of the first management action group can not fulfill the target of the network management intent within the scope of the managed entity set. For example, the production entity may obtain a value of a performance indicator of the target of the network management intent. For example, if the network management intent is the throughput intent, the production entity may obtain a value of a throughput indicator within the scope of the managed entity set, to determine whether the network management intent is fulfilled within the scope of the managed entity set.

In some implementations, the production entity may further determine a reason why the target of the network management intent is not fulfilled. For example, the reason is that a conflict occurs. For example, within the scope of the managed entity set of the network management intent, an intent conflict occurs between the network management intent and another network management intent. That the network management intent conflicts with the another network management intent that is currently executed means that an intent expected target of the network management intent and an intent expected target of the another network management intent that is currently executed cannot be simultaneously fulfilled within the scope of the managed entity set. For ease of understanding this embodiment of this application, the following uses examples to describe several possible cases of the conflict between the network management intent and the another network management intent that is currently executed. In a first possible case, the intent expectation or target of the network management intent semantically conflicts with the another network management intent that is currently executed. For example, if a target included in the energy saving intent is that a physical resource block utilization rate is less than or equal to 20%, but a target included in the throughput intent currently executed by the production entity is that a physical resource block utilization rate is greater than 40%, the production entity may semantically determine that the network management intent conflicts with the another network management intent. In a second possible case, the production entity determines that the first management action group conflicts with a management action group of the another network management intent that is currently executed. For example, the production entity executes the energy saving intent and the throughput intent. Because a management action (for example, symbol shutdown) executed by the production entity to fulfill the energy saving intent decreases a throughput, the target of the throughput intent cannot be fulfilled. In this case, the production entity may consider that the target of the throughput intent is not fulfilled because the throughput intent conflicts with the energy saving intent. In this way, the production entity may further feed back, to the consumption entity, the reason why the target of the network management intent is not fulfilled, to improve the manner of managing the network management intent.

In some implementations, after determining that the execution of the first management action group can not fulfill the target of the network management intent within the scope of the managed entity set, the production entity may determine whether to continue to execute or re-execute the first management action group, to fulfill the target of the network management intent within the scope of the managed entity subset. For example, if the production entity determines that the execution of the first management action group fulfills the target of the network management intent within the scope of the managed entity subset, the production entity may continue to execute the first management action group, and maintain execution of the network management intent based on the managed entity subset, instead of suspending the execution of the network management intent. For another example, the production entity may obtain a related parameter of a network environment, for example, an energy saving capability of the managed entity subset. The production entity may determine whether the execution of the first management action group can fulfill the target of the network management intent within the scope of the managed entity subset. If the production entity determines that the execution of the first management action group can fulfill the target of the network management intent within the scope of the managed entity subset, the production entity may re-execute the first management action group to fulfill the target of the network management intent within the scope of the managed entity subset.

In some other implementations, after determining that the execution of the first management action group can not fulfill the target of the network management intent within the scope of the managed entity set, the production entity may execute the second management action group, to fulfill the target of the network management intent within the scope of the managed entity subset. In other words, the production entity may determine and execute the second management action group, and the first management action group and the second management action group may include one or more same actions. This is not particularly limited in this application. For ease of understanding this embodiment of this application, the following mainly uses a manner in which the production entity executes the second management action group as an example.

The production entity may determine the second management action group in a plurality of manners. For example, the production entity may determine, based on the managed entity subset, a network resource used to fulfill the target of the network management intent within the scope of the managed entity subset, and execute the second management action group based on the network resource. The throughput intent is used as an example. The production entity may obtain a communication resource that can be used by a managed entity in the managed entity subset, determine the second management action group based on the communication resource, and send an instruction of the action group to the managed entity in the managed entity subset based on the second management action group. For example, the production entity may send, to the managed entity in the managed entity subset, an instruction for disabling carrier shutdown, disabling symbol shutdown, disabling radio frequency module dormancy, or disabling radio frequency channel shutdown. An action of disabling carrier shutdown may enable more frequency domain resources to be used within the scope of the managed entity subset, an action of disabling symbol shutdown may enable more time domain resources to be used within the scope of the managed entity subset, an action of disabling radio frequency module dormancy may enable more frequency domain resources to be used within the scope of the managed entity subset, and an action of disabling radio frequency channel shutdown may enable more space domain resources to be used within the scope of the managed entity subset. In this way, a throughput within the scope of the managed entity subset can be improved, so that a value of a throughput indicator within the scope of the managed entity subset reaches a corresponding throughput indicator value range. When the managed entity subset further has an associated acting time period, the production entity may determine a network resource that can be used to fulfill the target of the network management intent within the scope of the managed entity subset within the acting time period, and determine and execute the second management action group based on the network resource. In this way, this application provides a more flexible manner of managing the network management intent.

In some implementations, the production entity may further obtain assurance strength information, and the production entity may determine, based on the assurance strength information, a network resource that can be used to fulfill the target of the network management intent within the scope of the managed entity subset. For example, the assurance strength information may be information corresponding to another network management intent being currently executed by the production entity. For example, the production entity simultaneously maintains execution of the throughput intent and the energy saving intent, and the first management action group is used to fulfill the target of the throughput intent within the scope of the managed entity set. When the production entity determines that the execution of the first management action group can not fulfill the target of the throughput intent within the scope of the managed entity set, the production entity may determine the network resource based on the managed entity subset of the throughput intent and the assurance strength information of the energy saving intent. For example, when the assurance strength information indicates that an assurance strength of the energy saving intent is high (or the assurance strength of the energy saving intent is higher than an assurance strength of the throughput intent), the production entity cannot occupy a network resource used to fulfill the target of the energy saving intent, so that the target of the throughput intent is fulfilled. When the assurance strength information indicates that an assurance strength of the energy saving intent is low (or the assurance strength of the energy saving intent is lower than an assurance strength of the throughput intent), the production entity can occupy a network resource used to fulfill the target of the energy saving intent, so that the target of the throughput intent is fulfilled. For another example, the assurance strength information may be information about the network management intent in step S310. For example, the network management intent is the throughput intent. When the assurance strength information indicates that an assurance strength of the throughput intent is high, the production entity can occupy a network resource used to fulfill another network management intent, to ensure fulfillment of the target of the throughput intent. When the assurance strength information indicates that an assurance strength of the throughput intent is low, the production entity cannot occupy a network resource used to fulfill another network management intent. In this embodiment of this application, that the production entity executes a management action group that is not conducive to fulfilling the target of the network management intent may be considered as occupying a network resource of the network management intent. For example, the production entity performs carrier shutdown. This action is not conducive to fulfilling the target of the throughput intent, and it may be considered that this action is occupying the network resource of the throughput intent. In this way, the production entity determines the second management action group based on the assurance strength information. This can improve flexibility of managing the network management intent, and help improve network resource utilization efficiency and a user satisfaction.

In this way, based on this technical solution, after determining that the target of the network management intent within the scope of the managed entity set cannot be fulfilled, the production entity may flexibly execute the first management action group or the second management action group based on the managed entity subset to fulfill the target of the network management intent within the scope of the managed entity subset, instead of directly deleting or suspending the entire network management intent. This provides a flexible manner of managing the network management intent.

The foregoing describes a method in which the production entity executes, after determining that the execution of the first management action group can not fulfill the target of the network management intent within the scope of the managed entity set, the second management action group to fulfill the target of the network management intent within the scope of the managed entity subset. For ease of understanding of this embodiment of this application, the following describes two possible interaction manners between the consumption entity and the production entity with reference to FIG. 4 and FIG. 5.

FIG. 4 is a schematic flowchart of an implementation of a network management intent according to an embodiment of this application.

S401: A consumption entity sends a request message to a production entity. Correspondingly, the production entity receives the request message from the consumption entity.

The request message includes a managed entity subset. For descriptions of the managed entity subset, refer to the foregoing descriptions in FIG. 3. Details are not described herein again.

For example, the request message is used to request the production entity to create a network management intent. In other words, the request message may be an intent creation request message. The request message includes the network management intent, the network management intent includes a managed entity set, and the managed entity set includes the managed entity subset. For example, the intent creation request message may include the network management intent (for example, the data structure shown in FIG. 1), and the network management intent may include a managed object set. For example, a constraint or a condition represented by an object context in the network management intent may be used to determine the managed object set and a managed object subset. Alternatively, the request message includes the network management intent and a managed object subset. In other words, the managed object subset may be indicated or determined by using information other than the data structure of the network management intent. This is not particularly limited in this application. For more-detailed descriptions of the managed object set and the managed object subset, refer to the foregoing descriptions in FIG. 3. Details are not described herein again.

It may be understood that in some implementations, the request message is used to request the production entity to modify the network management intent. In other words, the request message may be an intent modification request message. A type of the request message is not particularly limited in this application. For example, the request message may alternatively be a network management intent activation request message. For ease of understanding, in this specification, an example in which the request message is the intent creation request message is used for description.

Optionally, in S402, the production entity performs a feasibility check.

The production entity obtains the managed entity subset in the request message, and may determine whether the managed entity subset exceeds a scope of the managed entity set. If the production entity determines that the managed entity subset exceeds the scope of the managed entity set, for example, a geographical area corresponding to the managed entity subset exceeds a geographical area corresponding to the managed entity set, the production entity may feed back, to the consumption entity, a message indicating that the managed entity subset is incorrect. If the production entity determines that the managed entity subset does not exceed the scope of the managed entity set, the production entity may perform a subsequent procedure.

It may be understood that the production entity may further perform the feasibility check (feasibility check) on the request message. For example, the production entity may detect whether the request message can be successfully interpreted, for example, detect whether the request message complies with syntax and semantics of the network management intent. If detecting that the request message can be successfully interpreted, the production entity may execute a first management action group based on the foregoing method. If the production entity detects that the request message cannot be successfully interpreted, for example, a syntax error exists, the production entity may send, to the consumption entity, a feedback indicating that the syntax error exists.

Optionally, in S403, the production entity sends a response message to the consumption entity. Correspondingly, the consumption entity receives the response message from the production entity.

The production entity may send the response message to the consumption entity in response to the request message in S401. For example, when the request message is the intent creation request message, the response message may be an intent creation request response message.

If the production entity determines, in step S402, that intent creation is not feasible, for example, the managed entity subset exceeds the scope of the managed entity set, or the request message does not comply with the syntax or semantics of the network management intent, the response message may be used to feed back that the intent creation is not feasible, or the response message may include information indicating that the intent creation is not feasible. In some implementations, the response message may further include failure cause information, where the failure cause information may indicate a cause of an intent creation failure (for example, the managed object subset exceeds a scope or information is incorrectly expressed). This is not particularly limited in this application.

It may be understood that, if the production entity detects that intent creation is feasible in step S402, in other words, the production entity determines that the managed entity subset is within the scope of the managed entity set, the response message may be used to feed back that the intent creation is feasible, or the response message includes information indicating that the intent creation is feasible. Alternatively, the production entity may not perform step S403. This is not particularly limited in this application.

It may be further understood that, if the production entity determines, based on the request message, that the intent creation is not feasible, and sends, to the consumption entity, the response message indicating that the intent creation is not feasible, the consumption entity may adjust or regenerate the request message based on the response message. For example, if the consumption entity determines, based on the response message, that the managed entity subset exceeds the scope of the managed entity set, the consumption entity may adjust a scope of the managed entity subset, and resend, to the production entity, a request message for requesting to create the network management intent or modify the network management intent. This process of feeding back a corresponding message by the production entity and resending the request message by the consumption entity may be repeated at least once until the production entity determines that the intent creation is feasible. For brevity, details are not described herein.

S404: The production entity executes the first management action group.

The production entity may execute the first management action group based on the managed entity set, where the first management action group includes at least one action for managing the managed entity set. For more-detailed descriptions of executing the first management action group by the production entity, refer to the foregoing descriptions in FIG. 3. Details are not described herein again.

S405: The production entity determines that the execution of the first management action group can not fulfill a target of the network management intent within the scope of the managed entity set.

For more-detailed descriptions of determining, by the production entity, that the target of the network management intent within the scope of the managed entity set is not fulfilled, refer to the foregoing descriptions in FIG. 3. Details are not described herein again.

S406: The production entity executes a second management action group, to fulfill the target of the network management intent within the scope of the managed entity subset.

For more-detailed descriptions of executing the second management action group by the production entity, refer to the foregoing descriptions in FIG. 3. Details are not described herein again. It may be understood that this step may alternatively be that the production entity executes the first management action group. For more-detailed descriptions, refer to the foregoing descriptions in FIG. 3. Details are not described herein again.

Optionally, in S407, the production entity sends an intent report to the consumption entity. Correspondingly, the consumption entity receives the intent report from the production entity.

The intent report may indicate whether the target of the network management intent is fulfilled within the scope of the managed entity subset. For example, the intent report may include an identifier indicating whether the target of the network management intent is fulfilled within the scope of the managed entity subset. The intent report may further include a value of a performance indicator within the scope of the managed entity subset. For example, if the performance indicator included in the target of the network management intent is a throughput indicator, for example, the target of the network management intent is that an average downlink throughput is greater than or equal to 5 Mbps, the intent report may include a throughput value within the scope of the managed entity subset.

In some embodiments, the intent report may further include a value of a performance indicator within the scope of the managed entity set but outside the scope of the managed entity subset. For example, the intent report may include a throughput value within the scope of the managed entity set but outside the scope of the managed entity subset. In this way, the consumption entity can improve, based on an overall fulfillment status of the managed entity set, the manner of managing the network management intent.

In some embodiments, the production entity may periodically feed back the intent report to the consumption entity, or feed back the intent report based on a query of the consumption entity. This is not particularly limited in this application.

In this way, based on this technical solution, after determining that the target of the network management intent within the scope of the managed entity set cannot be fulfilled, the production entity may flexibly execute the first management action group or the second management action group based on the managed entity subset to fulfill the target of the network management intent within the scope of the managed entity subset, instead of directly deleting or suspending the entire network management intent. This provides a flexible manner of managing the network management intent.

FIG. 4 describes a method for including the managed entity subset in the request message. In this embodiment of this application, the consumption entity may alternatively send the managed entity subset to the production entity after the production entity determines that the target of the network management intent within the scope of the managed entity set cannot be fulfilled. For ease of understanding embodiments of this application, the following describes this manner with reference to FIG. 5.

FIG. 5 is a schematic flowchart of another implementation of a network management intent according to an embodiment of this application.

Optionally, in S501, a consumption entity sends a request message to a production entity. Correspondingly, the production entity receives the request message from the consumption entity.

The request message may be used to request the production entity to create a network management intent. In other words, the request message may be an intent creation request message. The request message includes the network management intent, and the network management intent includes a managed entity set. For example, the intent creation request message may include the network management intent (for example, the data structure shown in FIG. 1), and the network management intent may include a managed object set. For example, a constraint or a condition represented by an object context in the network management intent may be used to determine the managed object set.

Optionally, in S502, the production entity performs a feasibility check.

The production entity may perform the feasibility check (feasibility check) on the request message. For example, the production entity may detect whether the request message can be successfully interpreted, for example, detect whether the request message complies with syntax and semantics of the network management intent. If detecting that the request message can be successfully interpreted, the production entity may execute a first management action group based on the foregoing method. If the production entity detects that the request message cannot be successfully interpreted, for example, a syntax error exists, the production entity may send, to the consumption entity, a feedback indicating that the syntax error exists.

Optionally, in S503, the production entity sends a response message to the consumption entity. Correspondingly, the consumption entity receives the response message from the production entity.

The production entity may send the response message to the consumption entity in response to the request message in S502. For example, when the request message is the intent creation request message, the response message may be an intent creation request response message. For more-detailed descriptions of step S503, refer to the foregoing descriptions of S403 in FIG. 4. Details are not described herein again.

S504: The production entity executes the first management action group.

The production entity may execute the first management action group based on the managed entity set, where the first management action group includes at least one action for managing the managed entity set. For more-detailed descriptions of executing the first management action group by the production entity, refer to the foregoing descriptions in FIG. 3. Details are not described herein again.

S505: The production entity determines that the execution of the first management action group can not fulfill a target of the network management intent within the scope of the managed entity set.

For more-detailed descriptions of determining, by the production entity, that the target of the network management intent within the scope of the managed entity set is not fulfilled, refer to the foregoing descriptions in FIG. 3. Details are not described herein again.

S506: The production entity sends notification information to the consumption entity. Correspondingly, the consumption entity receives the notification information from the production entity.

The notification information indicates that the target of the network management intent is not fulfilled within the scope of the managed entity set. For example, the notification information may indicate to the consumption entity that a status of fulfilling the network management intent by using the first management action group. For example, the notification information may include a value of a performance indicator within the scope of the managed entity set. For example, if the performance indicator included in the target of the network management intent is a throughput indicator, for example, the target of the network management intent is that an average downlink throughput is greater than or equal to 5 Mbps, the notification information may include a throughput value within the scope of the managed entity set.

S507: The consumption entity sends the managed entity subset to the production entity. Correspondingly, the consumption entity receives the managed entity subset from the consumption entity.

The consumption entity may determine the managed entity subset based on the notification information. For example, the consumption entity may determine the managed entity subset based on the fulfillment status of the network management intent included in the notification information. For another example, the consumption entity may determine the managed entity subset based on a usage scenario of the network management intent. For a manner of determining the managed entity subset, refer to the foregoing descriptions in FIG. 3. Details are not described herein again.

It may be understood that the consumption entity may directly send the managed entity subset to the production entity, or the consumption entity may regenerate a request message (for example, an intent creation request message), include the managed entity subset in the request message, and send the request message to the production entity. In other words, the consumption entity may update an expected object of the network management intent, the object context includes the managed entity subset, and the consumption entity may send an updated network management intent (or an object context of the network management intent) to the production entity. This is not particularly limited in this application.

S508: The production entity executes a second management action group, to fulfill the target of the network management intent within the scope of the managed entity subset.

For more-detailed descriptions of executing the second management action group by the production entity, refer to the foregoing descriptions in FIG. 3. Details are not described herein again. It may be understood that this step may alternatively be that the production entity executes the first management action group. For more-detailed descriptions, refer to the foregoing descriptions in FIG. 3. Details are not described herein again.

Optionally, in S509, the production entity sends an intent report to the consumption entity. Correspondingly, the consumption entity receives the intent report from the production entity.

For more-detailed descriptions of the intent report, refer to the foregoing descriptions of step S407 in FIG. 4. Details are not described herein again.

In this way, based on this technical solution, after determining that the target of the network management intent within the scope of the managed entity set cannot be fulfilled, the production entity may flexibly execute the first management action group or the second management action group based on the managed entity subset to fulfill the target of the network management intent within the scope of the managed entity subset, instead of directly deleting or suspending the entire network management intent. This provides a flexible manner of managing the network management intent.

It may be further understood that, in the foregoing method embodiments, the method and the operation implemented by the production entity may alternatively be implemented by a component (for example, a chip or a circuit) of the production entity. In addition, the method and the operation implemented by the consumption entity may alternatively be implemented by a component (for example, a chip or a circuit) of the consumption entity. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

For example, FIG. 6 is a diagram of a communication apparatus 10 according to an embodiment of this application. The apparatus 10 includes a transceiver unit 11 and a processing unit 12. The transceiver unit 11 may be configured to implement a corresponding communication function. The transceiver unit 11 may also be referred to as a communication interface or a communication unit. The processing unit 12 may be configured to perform data or information processing.

Optionally, the apparatus 10 further includes a storage unit. The storage unit may be configured to store instructions and/or data. The processing unit 12 may read the instructions and/or the data in the storage unit, so that the apparatus implements the foregoing method embodiments.

In a possible design, the apparatus 10 may be configured to execute an action executed by the production entity in the foregoing method embodiments. In this case, the apparatus 10 may be the production entity or a component of the production entity. The transceiver unit 11 is configured to perform a receiving and sending-related operation on the production entity side in the foregoing method embodiments. The processing unit 12 is configured to perform a processing-related operation on the production entity side in the foregoing method embodiments.

In a first possible implementation, the processing unit 12 is configured to: determine that execution of a first management action group can not fulfill a target of a network management intent within a scope of a managed entity set of the network management intent, where the managed entity set includes at least two managed entities, and the first management action group includes at least one action for managing the managed entity set; and execute a first management action group or a second management action group, to fulfill the target of the network management intent within a scope of a managed entity subset, where the managed entity subset is a subset of the managed entity set, and the second management action group includes at least one action for managing the managed entity subset. Optionally, the transceiver unit 11 is configured to receive the managed entity subset.

The apparatus 10 may implement a corresponding step or procedure performed by the production entity in the method embodiment according to embodiments of this application. The apparatus 10 may include a unit configured to perform the method performed by the production entity in the method embodiment of embodiments of this application. A specific process in which the units perform the foregoing corresponding steps is described in detail in the foregoing method embodiments. For brevity, details are not described herein again.

In another possible design, the apparatus 10 may be configured to execute an action executed by the consumption entity in the foregoing method embodiments. In this case, the apparatus 10 may be the consumption entity or a component of the consumption entity. The transceiver unit 11 is configured to perform a receiving and sending-related operation on the consumption entity side in the foregoing method embodiments. The processing unit 12 is configured to perform a processing-related operation on the consumption entity side in the foregoing method embodiments.

In a first possible implementation, the processing unit 12 determines a managed entity subset, where the managed entity subset is a subset of a managed entity set of a network management intent, the managed entity set includes at least two managed entities, the managed entity subset is used to execute a first management action group or a second management action group when execution of the first management action group can not fulfill a target of the network management intent in the managed entity set, to fulfill the target of the network management intent within a scope of the managed entity subset, the first management action group includes at least one action for managing the managed entity set, and the second management action group includes at least one action for managing the managed entity subset. The transceiver unit 11 is configured to send the managed entity subset.

The apparatus 10 may implement a corresponding step or procedure performed by the consumption entity in the method embodiment according to embodiments of this application. The apparatus 10 may include a unit configured to perform the method performed by the consumption entity in the method embodiment of embodiments of this application. A specific process in which the units perform the foregoing corresponding steps is described in detail in the foregoing method embodiments. For brevity, details are not described herein again.

It may be understood that the apparatus 10 herein is embodied in a form of a function unit. The term "unit" herein may be an application-specific integrated circuit (application-specific integrated circuit, ASIC), an electronic circuit, a processor (for example, a shared processor, a dedicated processor, or a group processor) configured to execute at least one software or firmware program and a memory, a combined logic circuit, and/or another suitable component that supports the described functions. In an optional example, a person skilled in the art may understand that the apparatus 10 may be specifically the production entity in the foregoing embodiments, and may be configured to perform the procedures and/or steps corresponding to the production entity in the foregoing method embodiments; or the apparatus 10 may be specifically the consumption entity in the foregoing embodiments, and may be configured to perform the procedures and/or steps corresponding to the consumption entity in the foregoing method embodiments. To avoid repetition, details are not described herein again.

The apparatus 10 in the foregoing solutions has a function of implementing corresponding steps performed by the communication device (for example, the production entity or the consumption entity) in the foregoing method. The function may be implemented by hardware, or may be implemented by hardware executing corresponding software. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit like the processing unit may be replaced with a processor, respectively performing receiving and sending operations and a related processing operation in the method embodiments.

In addition, the transceiver unit 11 may alternatively be a transceiver circuit (for example, may include a receiving circuit and a sending circuit), and the processing unit may be a processing circuit.

It should be noted that the apparatus in FIG. 6 may be the device in the foregoing embodiments, or may be a chip or a chip system, for example, a system on a chip (system on a chip, SoC). The transceiver unit may be an input/output circuit or a communication interface. The processing unit is a processor, a microprocessor, or an integrated circuit integrated on the chip. This is not limited herein.

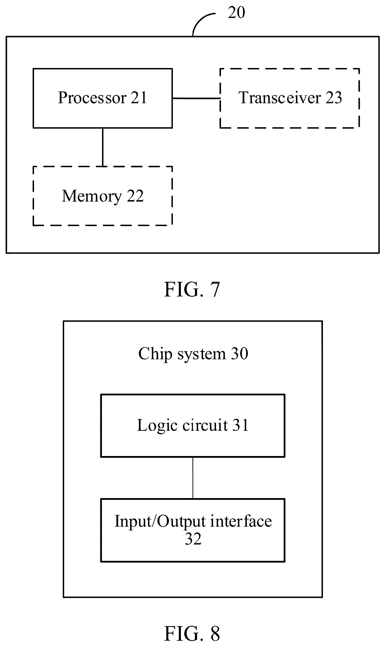

For example, FIG. 7 is a diagram of another communication apparatus 20 according to an embodiment of this application. The apparatus 20 includes a processor 21, and the processor 21 is coupled to a memory 22. Optionally, the apparatus 20 further includes the memory 22. The memory 22 is configured to store a computer program or instructions and/or data. The processor 21 is configured to execute the computer program or instructions stored in the memory 22, or read the data stored in the memory 22, to perform the methods in the foregoing method embodiments.

Optionally, there is at least one processor 21.

Optionally, there is at least one memory 22.

Optionally, the memory 22 and the processor 21 are integrated together or disposed separately.

Optionally, as shown in FIG. 7, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the production entity in the foregoing method embodiments.

For example, the processor 21 is configured to execute the computer program or instructions stored in the memory 22, to implement related operations of the production entity in the foregoing method embodiments, for example, the method performed by the production entity in the embodiment shown in FIG. 3.

In another solution, the apparatus 20 is configured to implement operations performed by the consumption entity in the foregoing method embodiments.

For example, the processor 21 is configured to execute the computer program or instructions stored in the memory 22, to implement related operations of the consumption entity in the foregoing method embodiments, for example, the method performed by the consumption entity in the embodiment shown in FIG. 3.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It may be further understood that the memory in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

When the processor is a general-purpose processor, a DSP, an ASIC, an FPGA or another programmable logic device, a discrete gate, a transistor logic device, or a discrete hardware component, the memory (a storage module) may be integrated into the processor.

The memory described in this specification aims to include but is not limited to these memories and any memory of another proper type.

For example, FIG. 8 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and output information processed by the chip system 30, or input to-be-processed data or signaling information to the chip system 30 for processing.

Specifically, for example, if the chip system 30 is installed in the production entity, the logic circuit 31 is coupled to the input/output interface 32, and the input/output interface 32 may input a wake-up signal to the logic circuit 31 for processing.

In a solution, the chip system 30 is configured to implement operations performed by the production entity in the foregoing method embodiments.

For example, the logic circuit 31 is configured to implement a processing-related operation performed by the production entity in the foregoing method embodiments, for example, a processing-related operation performed by the production entity in the embodiment shown in FIG. 3. The input/output interface 32 is configured to implement a sending and/or receiving-related operation performed by the production entity in the foregoing method embodiments, for example, a sending and/or receiving-related operation performed by the production entity in the embodiment shown in FIG. 3.

In another solution, the chip system 30 is configured to implement operations performed by the consumption entity in the foregoing method embodiments.

For example, the logic circuit 31 is configured to implement a processing-related operation performed by the consumption entity in the foregoing method embodiments, for example, a processing-related operation performed by the consumption entity in the embodiment shown in FIG. 3. The input/output interface 32 is configured to implement a sending and/or receiving-related operation performed by the consumption entity in the foregoing method embodiments, for example, a sending and/or receiving-related operation performed by the consumption entity in the embodiment shown in FIG. 3.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the method performed by the production entity in the foregoing method embodiments.

For another example, when a computer program is executed by a computer, the computer is enabled to implement the method performed by the consumption entity in the foregoing method embodiments.

An embodiment of this application further provides a computer program product, including instructions. When the instructions are executed by a computer, the method performed by the production entity or the consumption entity in the foregoing method embodiments is implemented.

An embodiment of this application further provides a communication system. The communication system includes the production entity and the consumption entity in the foregoing embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division during actual implementation. For example, at least two units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement embodiments, all or a part of embodiments may be implemented in a form of a computer program product. The computer program product includes at least one computer instruction. When computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating at least one usable medium. The usable medium may be a magnetic medium (for example, a floppy disk, a hard disk, and a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for managing a network management intent, wherein the method comprises:
determining that execution of a first management action group can not fulfill a target of a network management intent within a scope of a managed entity set of the network management intent, wherein the managed entity set comprises at least two managed entities, and the first management action group comprises at least one action for managing the managed entity set; and
executing the first management action group or a second management action group to fulfill the target of the network management intent within a scope of a managed entity subset, wherein the managed entity subset is a subset of the managed entity set, and the second management action group comprises at least one action for managing the managed entity subset.

2. The method according to claim 1, wherein the method further comprises:
receiving a request message, wherein the request message is used to request to create the network management intent or request to modify the network management intent, the request message comprises the network management intent, and the network management intent comprises the managed entity subset, or the request message comprises the network management intent and the managed entity subset.

3. The method according to claim 1 or 2, wherein an object context in the network management intent comprises information used to determine the managed entity set and/or the managed entity subset.

4. The method according to claim 1, wherein after the determination that execution of the first management action group can not fulfill the target of the network management intent within the scope of the managed entity set of the network management intent, the method further comprises:
sending notification information, wherein the notification information indicates that the target of the network management intent is not fulfilled within the scope of the managed entity set; and
receiving the managed entity subset in response to the notification information.

5. The method according to any one of claims 1 to 4, wherein
that the execution of the first management action group can not fulfill the target of the network management intent within the scope of the managed entity set of the network management intent means that the execution of the first management action group can not fulfill the target of the network management intent within the scope of the managed entity set of the network management intent in a first time period; and
executing the first management action group or the second management action group to fulfill the target of the network management intent within the scope of the managed entity subset means executing the first management action group or the second management action group to fulfill the target of the network management intent within the scope of the managed entity subset in a second time period, wherein the second time period is a subset of the first time period.

6. The method according to any one of claims 1 to 5, wherein executing the first management action group or the second management action group comprises:
determining, based on the managed entity subset, a network resource that is within the scope of the managed entity subset and that can be used to fulfill the target of the network management intent; and
executing the first management action group or the second management action group based on the network resource.

7. The method according to any one of claims 1 to 6, wherein the method further comprises:
determining that a reason why the execution of the first management action group can not fulfill the target of the network management intent within the scope of the managed entity set is that an intent conflict occurs.

8. The method according to any one of claims 1 to 7, wherein the method further comprises:
sending an intent report, wherein the intent report comprises a fulfillment status of the target of the network management intent within the scope of the managed entity subset.

9. The method according to claim 8, wherein the intent report further comprises a fulfillment status of the target of the network management intent within the scope of the managed entity set but outside the scope of the managed entity subset.

10. A method for managing a network management intent, wherein the method comprises:
determining a managed entity subset, wherein the managed entity subset is a subset of a managed entity set of a network management intent, the managed entity set comprises at least two managed entities, the managed entity subset is used to execute a first management action group or a second management action group when execution of the first management action group can not fulfill a target of the network management intent in the managed entity set, to fulfill the target of the network management intent within a scope of the managed entity subset, the first management action group comprises at least one action for managing the managed entity set, and the second management action group comprises at least one action for managing the managed entity subset; and
sending the managed entity subset.

11. The method according to claim 10, wherein sending the managed entity subset comprises:
sending a request message, wherein the request message is used to request to create the network management intent or request to modify the network management intent, the request message comprises the network management intent, and the network management intent comprises the managed entity subset, or the request message comprises the network management intent and the managed entity subset.

12. The method according to claim 10 or 11, wherein an object context in the network management intent comprises information used to determine the managed entity set and/or the managed entity subset.

13. The method according to claim 12, wherein the method further comprises:
receiving notification information, wherein the notification information indicates that the target of the network management intent is not fulfilled within the scope of the managed entity set; and
sending the managed entity subset comprises:
sending the managed entity subset in response to the notification information.

14. The method according to any one of claims 10 to 13, wherein a reason why the execution of the first management action group can not fulfill the target of the network management intent within the scope of the managed entity set is that an intent conflict occurs.

15. The method according to any one of claims 10 to 14, wherein the method further comprises:
receiving an intent report, wherein the intent report comprises a fulfillment status of the target of the network management intent within the scope of the managed entity subset.

16. The method according to claim 15, wherein the intent report further comprises a fulfillment status of the target of the network management intent within the scope of the managed entity set but outside the scope of the managed entity subset.

17. A method for managing a network management intent, wherein the method comprises:
sending a managed entity subset;
receiving the managed entity subset;
determining that execution of a first management action group can not fulfill a target of a network management intent within a scope of a managed entity set of the network management intent, wherein the managed entity set comprises at least two managed entities, and the first management action group comprises at least one action for managing the managed entity set; and
executing the first management action group or a second management action group to fulfill the target of the network management intent within a scope of the managed entity subset, wherein the managed entity subset is a subset of the managed entity set, and the second management action group comprises at least one action for managing the managed entity subset.

18. An apparatus for managing a network management intent, wherein the apparatus comprises a determining unit and an execution unit, wherein
the determining unit is configured to determine that execution of a first management action group can not fulfill a target of a network management intent within a scope of a managed entity set of the network management intent, wherein the managed entity set comprises at least two managed entities, and the first management action group comprises at least one action for managing the managed entity set; and
the execution unit is configured to execute the first management action group or a second management action group to fulfill the target of the network management intent within a scope of the managed entity subset, wherein the managed entity subset is a subset of the managed entity set, and the second management action group comprises at least one action for managing the managed entity subset.

19. An apparatus for managing a network management intent, wherein the apparatus comprises a transceiver unit and a processing unit, wherein
the processing unit is configured to determine a managed entity subset, wherein the managed entity subset is a subset of a managed entity set of a network management intent, the managed entity set comprises at least two managed entities, the managed entity subset is used to determine a second management action group when execution of a first management action group can not fulfill a target of the network management intent in the managed entity set, to fulfill the target of the network management intent within a scope of the managed entity subset, the first management action group comprises at least one action for managing the managed entity set, and the second management action group comprises at least one action for managing the managed entity subset; and
the transceiver unit is configured to send the managed entity subset.

20. A communication apparatus, comprising a unit configured to perform the method according to any one of claims 1 to 9, or comprising a unit configured to perform the method according to any one of claims 10 to 16.

21. A communication system, comprising an apparatus configured to perform the method according to any one of claims 1 to 9 and an apparatus configured to perform the method according to any one of claims 10 to 16.

22. The system according to claim 21, further comprising a managed entity of a network management intent.

23. A computer-readable storage medium, wherein the computer-readable storage medium stores a computer program, and when the computer program runs on a computer, the computer is enabled to perform the method according to any one of claims 1 to 9, or the computer is enabled to perform the method according to any one of claims 10 to 16.

24. A computer program product, comprising computer program code, wherein when the computer program code is run on a computer, the computer is enabled to implement the method according to any one of claims 1 to 9, or the computer is enabled to implement the method according to any one of claims 10 to 16.

25. A communication apparatus, comprising a processor, configured to execute a computer program stored in a memory, to enable the apparatus to perform the method according to any one of claims 1 to 9; or configured to execute a computer program stored in a memory, to enable the apparatus to perform the method according to any one of claims 10 to 16.

26. The apparatus according to claim 25, wherein the apparatus further comprises the memory.
